# EUROPEAN PATENT APPLICATION

(11) **EP 1 680 997 A2**
(43) Date of publication of application: **19.07.2006**
(21) Application number: 05107758.4
(22) Date of filing: 24.08.2005
(51) Int. Cl.: A47J 37/07, F24C 15/10

(54) **Cooking apparatus**

(30) Priority: 18.01.2005 KR 2005004717
(71) Applicant: Samsung Electronics Co., Ltd., Yeongtong-gu Suwon-si, Gyeonggi-do (KR)
(72) Inventor: LEE, Byoung In, Gyeonggi-do (KR); NA, Seon Uk, Yongin-si Gyeonggi-do (KR); KIM, Dong Won, Jangan-gu Suwon-si Gyeonggi-do (KR); KIM, Chul, SangHyun-dong Yongin-si Gyeonggi-do (KR)
(74) Representative: Grey, Ian Michael

(57) **Abstract**

Apparatus for cooking food comprising a housing having a grill to receive food to be cooked, a heat reflecting element disposed beneath the grill to reflect heat generated by a heater adjacent to the heat reflecting element towards the food and at least one fan for cooling the heat reflecting element. Furthermore, an airflow path is in the housing adjacent to the heat reflecting element so that, when the fan is operational, air flows through along the airflow path to cool the heat reflecting element.

## Description

The present invention relates to an apparatus for cooking food comprising a housing having a grill to receive food to be cooked, a heat-reflecting element disposed beneath the grill to reflect heat generated by a heater adjacent to the heat-reflecting element towards the food and at least one fan for cooling the heat reflecting element.

Apparatus for cooking food by grilling generally includes a grill member on which the food is placed and a heating member, arranged such that the food is exposed to the heating member. Heat generated by the heating member is therefore directly transmitted to the food to be cooked on the grill member thereby cooking the food.

In order to cook meat by grilling, appropriately sized pieces of meat marinated in a sauce may be placed on the grill member. When the heating member heats such pieces of meat marinated in sauce, fat from the meat or the applied sauce may fall from the meat.

To prevent the heating member from being contaminated by fat and sauce dropped from the food, the heating member is not disposed directly under the grill member. Henceforth, heat from the heating member is not effectively transmitted to the food placed on the grill member thereby lowering heat efficiency.

In order to solve the above mentioned problem, a new type of cooking apparatus has been proposed which is disclosed in Korean Unexamined Patent Publication No. 2004-71023. This patent describes cooking apparatus including a grill member disposed on a body, a pair of heating members mounted in an inclined manner at the sides of the body, below the grill member and a heat reflecting member disposed directly under the grill member whereby some of the heat generated from the heating members is transmitted directly to the grill member and the remainder of the heat is reflected by the heat reflecting member and then transmitted to the grill member so as to effectively cook the food.

In the proposed cooking apparatus, collection grooves are provided on the upper surface of the heat reflecting member to collect fat and sauce (hereinafter referred to as "fat") dropped from the food being cooked on the grill member, and a cooling fan is mounted in the heat reflecting member to prevent fat on the heat reflecting member from being burnt.

In the aforementioned conventional cooking apparatus, however, only by a single cooling fan is used to cool the heat reflecting member and the cooling air is not guided. As a result, the heat reflecting member is not effectively cooled.

Both sides of the heat reflecting member are positioned closer to the heating member than the centre of the heating reflecting member. As a result, the temperature of the heat reflecting member is locally increased and therefore fat dropped onto both sides of the heat reflecting member may be burnt into smoke.

The present invention seeks to provide an apparatus for cooling food which overcomes or substantially alleviates the problems discussed above.

Apparatus for cooking food according to the present invention is characterised by an airflow path in the housing adjacent to a heat reflecting element so that, when the fan is operational, air flows through the airflow path to cool the heat reflecting element.

In a preferred embodiment, the heat reflecting element extends between heaters and the heat reflecting element comprises an outer portion adjacent to each heater and a central portion extending between each outer portion, a fan being associated with each outer portion of the heat reflecting element for directing air over said outer portions of the heat reflecting element.

Advantageously, the heat reflecting element comprises a pair of baffles to separate the airflow path into an upstream airflow channel beneath each outer portions of the heat reflecting element and a downstream airflow path beneath the central portion of the heat reflecting element.

Preferably, the housing has an end wall and each baffle terminates short of the end wall to allow air that has flowed along the upstream flow path beneath the outer portions of the heat reflecting element to flow into the downstream flow path beneath the central portion of the heat reflecting element.

Each baffle may depend downwardly from a point between where the outer portions and central portion of the heat reflecting element meet each other.

Preferably, each outer portion meets the central portion at an angle to form a trough to collect fat and food particles therein.

Embodiments of the present invention will now be described, by way of example only, with reference to the accompanying drawings, in which:
Figure 1 is an exploded perspective view of a cooking apparatus in accordance with the present invention;
Figure 2 is an assembled perspective view of the cooking apparatus shown in Figure 1;
Figure 3 is a sectional view taken along the line III-III of Figure 1 illustrating each pair of cooling fans and partitioning plates mounted to a heat reflecting unit; and
Figure 4 is a sectional view taken along the line IV-IV of Figure 2 illustrating the rear surface of the heat reflecting unit partitioned into two side channels and a central channel by the pair of partitioning plates.

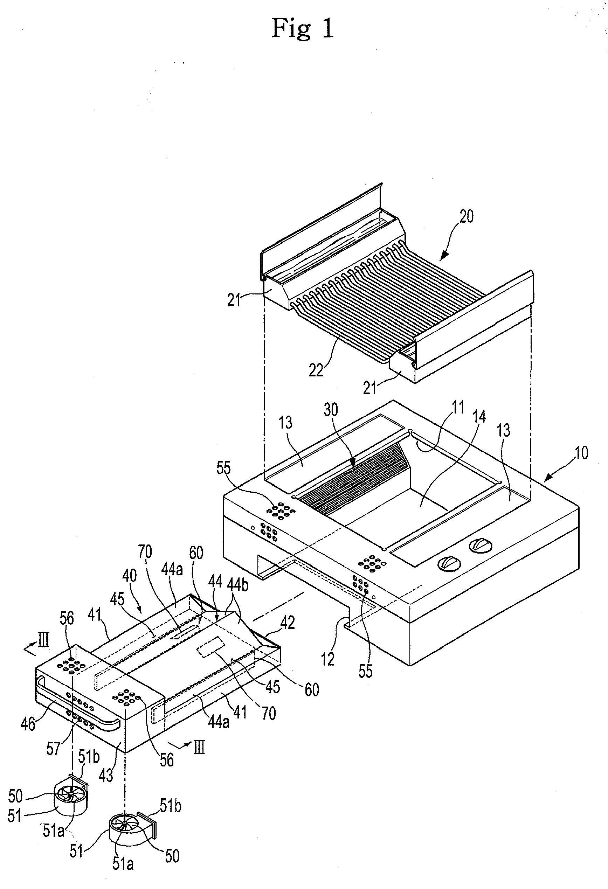

Referring to the drawings, there is shown in Figure 1 cooking apparatus comprising a body 10 formed in the shape of a box and having an upper opening 11 and a front opening 12, a plurality of heating units 30 mounted to the inner sides of the body 10 to generate heat necessary to cook food, a grill unit 20 disposed on the body 10 such that the food can be placed thereon, and a heat reflecting unit 40 disposed under the grill unit 20 in the body 10 to reflect radiant heat emitted from the heating units 30 to the grill unit 20.

The heating units 30 are disposed on opposing sides of the interior of the body 10 in a horizontal direction (i.e. front-to-back direction) such that fat does not fall onto the heating units 30 from food placed on the grill unit 20 and the heating units 30 are inclined toward the grill unit 20 to effectively transmit heat to the food.

The grill unit 20 includes a pair of water buckets 21 spaced apart from each other such that the water buckets 21 are seated on seats 13 provided on the upper surface of the body 10 and configured to store water therein and a plurality of grill pipes 22, having ends connected with the water buckets 21 such that they are filled with water.

The heat reflecting unit 40 includes two side plates 41 and a rear plate 42, a front part 43 having a predetermined space formed therein and a heat reflecting plate 44 defined by the side plates 41, the rear plate 42 and the front part 43.

The heat reflecting plate 44 comprises a pair of first reflecting surfaces 44a which incline downwards from the upper ends of the side plates 41 and a pair of second reflecting surfaces 44b which incline upwards from the lower ends of the first reflecting surfaces 44a, extending until the upper ends of the second reflecting surfaces 44b meet each other. As a result, the heat reflecting plate 44 forms a "W" shape.

More specifically, each first reflecting surface 44a is inclined downwards from the lower end of the corresponding heating unit 30 and each second reflecting surface 44b is inclined upward from the lower end of the corresponding first reflecting surface 44a until each second reflecting surface 44b reaches a middle position between the heating unit 30 so as to reflect heat generated from the heating units 30 to the grill unit 20.

Also, the recesses formed between the first reflecting surfaces 44a and the second reflecting surfaces 44b are used as fat collection portions 45 to collect fat dropped onto the first and second reflecting surfaces 44a and 44b from food placed on the grill unit 20.

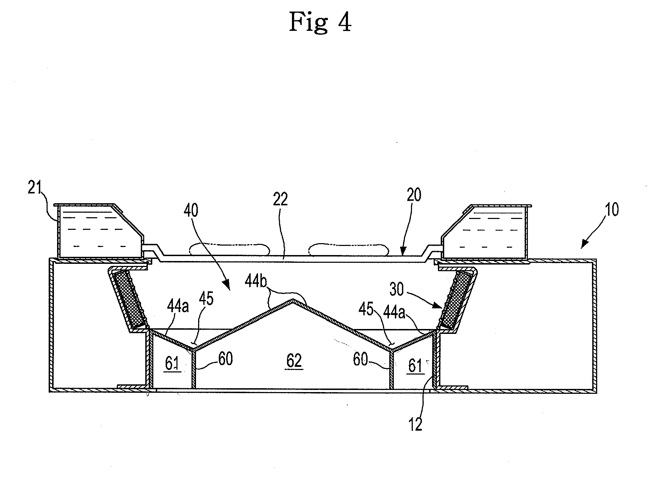

In order to prevent the temperature of the heat reflecting unit 40 from increasing above a predetermined level due to the heat transmitted by the heating units 30, and therefore, to prevent fat falling on the heat reflecting unit 44 from being burnt, a pair of cooling fans 50 located in fan casings are mounted in the front part 43 of the heat reflecting unit 40 and a pair of partitions 60 are disposed vertically at the lower surface of the heat reflecting plate 44 in the longitudinal direction of the heat reflecting unit 40 (see Figure 4).

In order to introduce external air to the cooling fans 50 mounted in the heat reflecting unit 40, a plurality of communication holes 55 are formed through the upper part of the front surface and the front part of the upper surface of the body 10 and a plurality of suction holes 56 are provided through the upper surface of the front part 43 of the heat reflecting unit 40 facing the respective cooling fans 50.

A plurality of discharge holes 57 are also formed through the front surface of the front part 43 of the heat reflecting unit 40 to discharge air forcibly moved by the cooling fans 50 to cool the heat reflecting unit 40 of the body 10.

External air is therefore introduced to the upper surface of the front part 43 of the heat reflecting unit 40 through the front and upper parts of the body 10 to cool the heat reflecting unit 40 and then discharged through the front surface of the front part 43.

In order to quickly discharge air circulated through the heat reflecting unit 40 and to prevent air circulated through the heat reflecting unit 40 from being introduced to the cooling fans 50, the bottom 14 of the body 10 corresponding to the front part 43 of the heat reflecting unit 40 is opened and therefore, air circulated through the interior of the heat reflecting unit 40 is also discharged through the lower part of the front part 43.

In order to extend/retract the heat reflecting unit 40 from/into the body 10 through the front opening 12 in the horizontal direction such that the heat reflecting unit 40 is released from/mounted in the body 10, a grip 46 is formed at the front part 43 of the heat reflecting unit 40 while being protruded frontward.

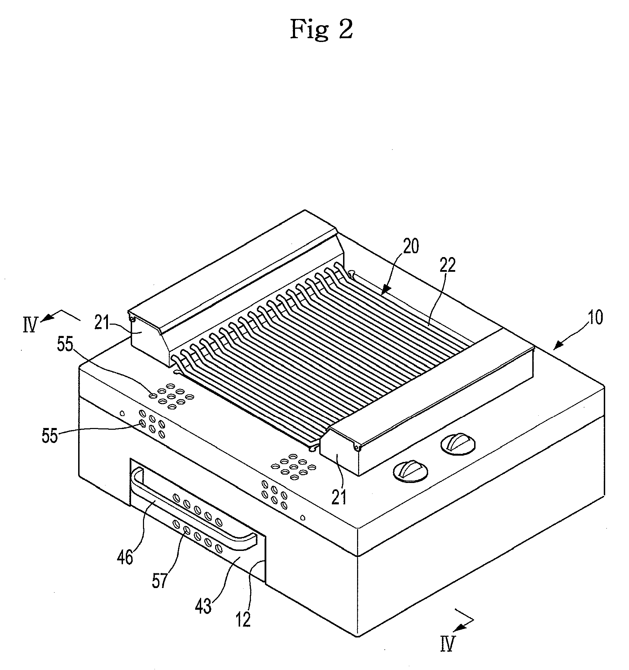

Accordingly, as shown in Figure 2, when a user holds the grip 46 of the heat reflecting unit 40 and pushes the heat reflecting unit 40 into the body 10 through the front opening 12 in a sliding fashion, the heat reflecting unit 40 is easily mounted in the body 10.

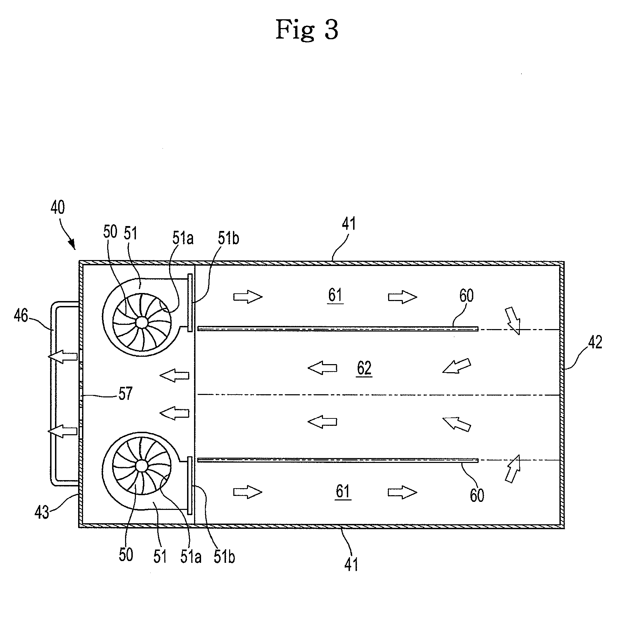

The heat reflecting unit cooling surface will be described hereinafter with reference to Figures 3 and 4. As shown in Figure 1, the pair of cooling fans 50 are surrounded by the fan casings 51 and mounted in the front part 43 of the heat reflecting unit 40. Each fan casing 51 comprising an inlet port 51a formed in the upper part thereof and an outlet port 51b formed in the rear part thereof. Each cooling fan 50 may be a centrifugal fan which sucks air through the upper part of each fan casing 51 and discharges air through the rear part of each fan casing 51.

The pair of partitions 60 which are disposed vertically below the lower surface of the heat reflecting plate 44, extend along the lines at which the first reflecting surfaces 44a meet the corresponding second reflecting surfaces 44b. The rear ends of the partitions 60 are spaced apart from the rear plate 42 of the heat reflecting unit 40.

At the lower surface of the heat reflecting plate 44 the partitions 60 form a pair of side channels 61 and a central channel 62 which communicate with one another at the rear end of the heat reflecting plate 44. Each fan casing 51, in which the corresponding cooling fan 50 is mounted, is disposed in front of the corresponding side channel 61 while the outlet port 51b faces the corresponding side channel 61.

Consequently, air forcibly blown by the respective cooling fans 50 flows along the side channels 61 and meets at the rear end of the heat reflecting plate 44 where the flow direction of the air is changed and the air then flows along the central channel 62.

The cooling fans 50 may be designed such that the cooling fans 50 are automatically operated or stopped based on whether the cooking apparatus is operated or not. Alternatively, temperature sensors 70 may be attached to the lower surface of the heat reflecting plate 44 such that the cooling fans 50 are automatically operated when the temperature of the heat reflecting plate 44 increases to a level high enough to burn fat on the heat reflecting plate 44 and the cooling fans 50 are automatically stopped when the temperature of the heat reflecting plate 44 decreases to a level below which fat is burnt on the heat reflecting plate 44.

When the user puts food to be cooked on the grill pipes 22 and operates the heating units 30 and the cooling fans 50, some of the heat generated from the heating units 30 is directly transmitted to the food, and the remainder of the heat is reflected to the food by the first reflecting surfaces 44a and the second reflecting surfaces 44b to thereby cook the food. When the food is cooked as described above, fat drops from the food onto the first reflecting surfaces 44a and the second reflecting surfaces 44b and is then collected in the fat collection parts 45.

At this time, external air is introduced into the front part 43 of the heat reflecting unit 40 through the communication holes 55 formed through the upper part of the front surface and the front part of the upper surface of the body 10 and the suction holes 56 provided at sides of the upper surface of the front part 43 of the heat reflecting unit 40. The introduced air passes through the respective fan casings 51 and then flows to the rear of the heat reflecting unit 40 along the side channels 61 to cool the respective first reflecting surfaces 44a of the heat reflecting plate 44 adjacent to the respective heating units 30.

The air having passed through the respective side channels 61 is gathered at the rear end of the heat reflecting unit 40 wherein the flow direction of the air is changed and then flows forward along the central channel 62 to cool the second reflecting surfaces 44b of the heat reflecting plate 44.

Some of the air having passed through the central channel 62 is discharged out of the body 10 through the discharge holes 57 formed at the front surface of the front part 43 of the heat reflecting unit 40 and the remainder of the air is discharged out of the body 10 through the lower part of the front part 43.

External air continuously circulates in the heat reflecting unit 40 along the above mentioned channels to cool the heat reflecting unit 40.

The communication holes 55 provided to introduce external air are spaced an appropriate distance from the discharge holes 57 provided to discharge circulated air out of the body 10. Consequently, air discharged through the discharge holes 57 is not reintroduced through the communication holes 55. Also, the inlet ports 51a of the fan casings 51 are close to the suction holes 56 provided at the upper surface of the front part 43 of the heat reflecting unit 40 and therefore air having flowed from the central channel 62 to the front part 43 is not reintroduced to the cooling fan 50.

The external air flows along both sides of the heat reflecting unit 40 and then flows along the centre of the heat reflecting unit 40 by the cooling fans 50 and the partitions 60. As a result, a sufficient amount of air is uniformly supplied to the entire surface of the heat reflecting unit 40 and therefore the heat reflecting unit 40 is effectively cooled.

The temperature of the first reflecting surfaces 44a of the heat reflecting unit 40 adjacent to the heating units 30 may be locally increased to a higher level than that of the second reflecting surfaces 44b of the heat reflecting unit 40 away from the heating units 30. However, external air flows along the first reflecting surfaces 44a and then flows along the second reflecting surfaces 44b. The temperature of the first reflecting surfaces 44a is therefore prevented from locally increasing and therefore fat is prevented from being burnt due to the local increase of temperature at the first reflecting surfaces 44a.

Although an embodiment of the present invention has been shown and described, it will be appreciated by those skilled in the art that this is a preferred embodiment only and changes may be made to this embodiment without departing from the principles of the invention, the scope of which is defined in the claims and their equivalents and the foregoing description should be regarded as a description of a preferred embodiment only.

## Claims

1. Apparatus for cooking food comprising a housing having a grill to receive food to be cooked, a heat-reflecting element disposed beneath the grill to reflect heat generated by a heater adjacent to the heat-reflecting element towards the food and at least one fan for cooling the heat reflecting element, **characterised by** an airflow path in the housing adjacent to the heat-reflecting element so that, when the fan is operational, air flows through the airflow path to cool the heat-reflecting element.

2. Apparatus according to claim 1, wherein the heat-reflecting element extends between heaters and the heat-reflecting element comprises an outer portion adjacent to each heater and, a central portion extending between each outer portion, a fan being associated with each outer portion of the heat-reflecting element for directing air over said outer portions of the heat-reflecting element.

3. Apparatus according to claim 2, wherein the heat reflective element comprises a pair of baffles to separate the airflow path into an upstream airflow channel beneath each outer portions of the heat-reflective element and, a downstream airflow path beneath the central portion of the heat reflective element.

4. Apparatus according to claim 3, wherein the housing has an end wall and each baffle terminates short of the end wall to allow air that has flowed along the upstream flow path beneath the outer portions of the heat reflective element to flow into the downstream flow path beneath the central portion of the heat reflective element.

5. Apparatus according to claim 3 or 4, wherein each baffle depends downwardly from a point between where the outer portions and central portion of the heat-reflective element meet each other.

6. Apparatus according to claim 4, wherein each outer portion meets the central portion at an angle to form a trough to collect fat and food particles therein.

7. A cooking apparatus comprising a body, a grill unit disposed on the body, a plurality of heating units mounted at sides of an interior of the body, facing the grill unit and a heat reflecting unit disposed under the grill unit in the body to reflect heat generated from the heating units to the grill unit wherein the heat reflecting unit comprises a pair of cooling fans mounted therein to enable air to flow along the side surfaces thereof adjacent to the respective heating units.

8. The cooking apparatus according to claim 7 wherein the heat reflecting unit comprises side plates and a rear plate, a front part having a predetermined space formed therein and a heat reflecting plate comprising a pair of first reflecting surfaces extending from upper ends of the side plates while being inclined downward respectively and a pair of second reflecting surfaces extending from lower ends of the first reflecting surfaces while being inclined upward respectively until the upper ends of the second reflecting surfaces meet each other and wherein the cooling fans are disposed to forcibly blow air toward the respective first reflecting surfaces.

9. The cooking apparatus according to claim 8 wherein the heat reflecting unit further comprises a pair of partitions to partition the first reflecting surfaces from the second reflecting surfaces respectively and wherein the heat reflecting unit comprises two side channels to allow air forcibly blown by the respective cooling fans to flow from a front to a rear of the heat reflecting unit along sides thereof respectively and a central channel to allow the air to flow from the rear to the front of the heat reflecting unit along a centre thereof.

10. The cooking apparatus according to claim 8 further comprising a plurality of fan casings, wherein each of the cooling fans is mounted in a respective fan casing and each fan casing comprising an inlet port formed at an upper part thereof and an outlet port formed at a rear part thereof, and wherein the front part includes a plurality of suction holes formed at both sides of the upper surface thereof, and a plurality of discharge holes formed at a center of the front surface thereof, wherein air is introduced through the upper surface of the front part, to cool the heat reflecting plate and the air is then discharged through the front surface of the front part.

11. The cooking apparatus according to claim 10 wherein the body comprises a plurality of communication holes formed at the upper part of the front surface thereof, and the communication holes communicating with the suction holes such that the air is introduced into the suction holes through the communication holes in front of the body.

12. The cooking apparatus according to claim 10 wherein each of the cooling fans is of a centrifugal fan.

13. The cooking apparatus according to claim 9 wherein the body comprises a front opening formed at the front surface thereof, through which the heat reflecting unit is slidably released from/mounted into the body, and wherein a bottom of the body corresponding to the front part of the heat reflecting unit, is opened such that air circulated through an interior of the heat reflecting unit is discharged through a lower part of the front part.

14. The cooking apparatus according to claim 8 further comprising recesses formed between the first reflecting surfaces and the second reflecting surfaces, respectively, by the inclined structure of the first reflecting surfaces and the second reflecting surfaces, the recesses serving as fat collection parts to collect fat dropped from food placed on the grill unit.

15. A cooking apparatus comprising a body, a grill unit disposed on the body, a plurality of heating units mounted at sides of an interior of the body while being inclined toward the grill unit, a heat reflecting unit disposed under the grill unit in the body, wherein the heat reflecting unit comprises a pair of partitions disposed in the longitudinal direction thereof while being opposite to the heating units, respectively, such that an interior of the heat reflecting unit is partitioned into a pair of side channels and a central channel by the partitions and cooling fans mounted in front of the side channels, respectively, to cool the heat reflecting unit.

16. The cooking apparatus according to claim 15 wherein the heat reflecting unit has a plurality of suction holes, which are provided above the cooling fans, and the heat reflecting unit has a plurality of discharge holes formed at the center of the front surface thereof.

17. The cooking apparatus according to claim 16 further comprising fat collection parts provided at the sides of the upper surface of the heat reflecting unit to collect fat dropped from food placed on the grill unit.

18. The cooking apparatus of claim 7, further comprising temperature sensors attached at a lower surface of the heat reflecting unit to sense the temperature of the heat reflecting unit, wherein the cooling fans automatically operate when the temperature of the heat reflecting unit increases above the predetermined level.

19. The cooking apparatus of claim 15 further comprising temperature sensors attached at a lower surface of the heat reflecting unit to sense the temperature of the heat reflecting unit, wherein the cooling fans automatically operate when the temperature of the heat reflecting unit increases above the predetermined level.
